Europäisches Patentamt

European Patent Office

Office européen des brevets

(11) Veröffentlichungsnummer: **0 284 746 B1**

(12) **EUROPÄISCHE PATENTSCHRIFT**

(45) Veröffentlichungstag der Patentschrift: **29.07.92**

(21) Anmeldenummer: **88101959.0**

(22) Anmeldetag: **10.02.88**

(51) Int. Cl.⁵: **H02K 9/22**, H02K 9/19

(54) **Hydraulisches Pumpenaggregat.**

(30) Priorität: **24.02.87 DE 3705909**

(43) Veröffentlichungstag der Anmeldung:
**05.10.88 Patentblatt 88/40**

(45) Bekanntmachung des Hinweises auf die
Patenterteilung:
**29.07.92 Patentblatt 92/31**

(84) Benannte Vertragsstaaten:
**AT DE FR GB IT NL SE**

(56) Entgegenhaltungen:
EP-A- 0 198 250
CH-A- 105 337
DE-A- 2 833 661
FR-E- 93 164

**PATENT ABSTRACTS OF JAPAN**, vol. 9, no.
147 (E-323)[1870], 21. Juni 1985; & JP-A-60 28
750

(73) Patentinhaber: **HEILMEIER & WEINLEIN Fabrik
für Oel-Hydraulik GmbH & Co. KG
Streitfeldstrasse 25
W-8000 München 80(DE)**

(72) Erfinder: **Brunner, Rudolf
Wankstrasse 23
W-8011 Baldham(DE)**

(74) Vertreter: **Patentanwälte Grünecker, Kinkeldey, Stockmair & Partner
Maximilianstrasse 58
W-8000 München 22(DE)**

## Beschreibung

Die Erfindung betrifft ein hydraulisches Pumpenaggregat der im Oberbegriff des Patentanspruchs 1 angegebenen Art.

Bei einem aus der EP-A3-01 98 250 bekannten Pumpenaggregat für Dauerbetrieb besteht die Gefahr, daß sich infolge eines gedrosselten Wärmetransports zum zwangsgekühlten Gehäuseoberteil das obere Ende des Stators auf für den Elektromotor unschädliche, für das Öl im Ölbad jedoch schädliche Temperatur erhitzt, was die Standzeit des Öls beträchtlich verkürzt.

Bei einem aus JP-A-60 28 750 bekannten Elektromotor mit zwangsgekühltem Gehäuse liegen an beiden Stirnenden des Stators und an der Gehäuseinnenwand Wärmeübertragungsringe aus wärmeleitfähigem Material an, um die Temperatur der von Luft als Kühlmedium umgebenen Wicklungen zu reduzieren.

Bei einem aus FR-E-93 164 bekannten, flüssigkeitsgekühlte Elektromotor sind aus Leichtmetall bestehende Wärmeübertragungsringe vorgesehen, um die in der Wicklung entstehende Wärme an das Kühlmedium zu übertragen.

Der Erfindung liegt die Aufgabe zugrunde, ein hydraulisches Pumpenaggregat der eingangs genannten Art zu schaffen, daß montagetechnisch vereinfacht ist und trotz Dauerbetriebs eine lange Standzeit für das Öl gewährleistet.

Die gestellte Aufgabe wird erfindungsgemäß mit den im kennzeichnenden Teil des Patentanspruchs 1 angegebenen Merkmalen gelöst.

Über die vom Wärmeübertragungskörper gebildete Wärmebrücke wird die am oberen Statorende verstärkt auftretende Wärme gezielt in den zwangsgekühlten Gehäuseoberteil transportiert, an dem die beste Kühlwirkung gegeben ist. Dadurch wird der Wärmedurchsatz gesteigert und eine erzwungene Wärmetransportrichtung nach oben erreicht. Der Wärmeübertragungskörper schirmt zum Teil die Statoroberfläche und die Innenwand des Gehäuses gegen einen direkten Kontakt mit dem Öl dort ab, wo eine gegebenenfalls für das Öl schädliche hohe Temperatur vorliegt. Das Öl wird in diesem kritischen Bereich thermisch entlastet, wodurch auch bei Dauerbetrieb eine lange Standzeit für das Öl gewährleistet ist. Wegen der auf der Höhe des Stators umlaufenden Teilungsfuge im Gehäuse braucht der Stator nur über einen kurzen Weg in den Unterteil eingepreßt zu werden. Dies vereinfacht die Montage und die Montagevorbereitungen. Die Montage kann ferner durch den zylindrischen Wärmeübertragungskörper vereinfacht werden, weil dieser nach der Montage die Teilungsfuge überbrückt und als Zentrieransatz zum Aufstecken des Oberteils fungiert. Außerdem überträgt der Wärmeübertragungskörper die Wärme über die Teilungsfuge hinweg in den Oberteil.

Eventuelle Dichtprobleme aufgrund der geteilten Bauweise werden zweckmäßigerweise gemäß Anspruch 2 oder Anspruch 3 gelöst. Obwohl die Dichtelemente Drosselstellen im Wärmetransport darstellen, ist ihre Wirkung auf den Wärmetransport nach oben vernachlässigbar, da der Wärmeübertragungskörper eine die Dichtungen umgehende Wärmebrücke bildet.

Bei der Ausführungsform gemäß Anspruch 4 ist die Montage des Elektromotors bzw. des Stators einfach. Der Kragen der Aufnahme, der den Wärmeübertragungskörper bildet, dient als Zentrieransatz zum Aufstecken des Oberteils. Außerdem führt der Kragen bei gegebener Baugröße des Stators zu einem vergrößerten Innendurchmesser im Oberteil, woraus bei gleichem Fassungsvermögen des oberhalb des Elektromotors vorliegenden Speicherraums für Öl ein niedrigeres Gehäuse resultiert und das Kühlgebläse dank des größeren Durchmessers leistungsfähiger ist. Das Kühlgebläse rückt näher an den Stator, was zu verbesserter Kühlleistung führt. Da die Kühlwirkung beim Unterteil sekundär ist, benötigt dieser keine Außenrippen, was eine einfache und preiswert herstellbare Bauform ermöglicht, die von Maßnahmen zur Lagesicherung des Elektromotors und der hydraulischen Pumpenelemente dominiert wird und die Kühlung außer acht lassen kann.

Zweckmäßig ist ferner die Ausführungsform von Anspruch 5, weil über die Schulter ein axialer Wärmetransport in den Oberteil erzielt wird.

Bei der Ausführungsform gemäß Anspruch 6 wird über den großzügigen Querschnitt des Wärmeübertragungskörpers ein hoher Wärmedurchsatz erreicht. Die Gehäusebauhöhe wird wegen des größeren Innendurchmessers des Oberteils geringer.

Die Ausführungsform von Anspruch 7 ist vorteilhaft, weil in diesem Bereich des Aggregats wenige, großzügig bemessene Ölkanäle für den Ölaustausch sorgen.

Die Ausführungsform von Anspruch 8 ist vorteilhaft, weil der Kragen so weit in den Oberteil hinaufragt, daß über den großen Kontaktbereich ein hoher Wärmedurchsatz erreicht wird, der auch von den Wicklungen nach außen abgestrahlte Wärme einschließt.

Eine weitere, hinsichtlich der Herstellungskosten und des Montageaufwandes zweckmäßig Ausführungsform geht schließlich aus Anspruch 9 hervor. Solche Gehäuse sind handelsüblich und benötigen keinen spezielle Nachbearbeitung. Gerade bei größeren Baugrößen des in Serienproduktion hergestellten Pumpenaggregats ist es nämlich teuer, gezogene Leichtmetall-Rohre zu verwenden. Gegossene Elektromotor-Gehäuse großer Bauserien sind demgegenüber wesentlich preisgünstiger erhältlich.

Anhand der Zeichnung werden Ausführungsformen des Erfindungsgegenstandes erläutert. Es zeigen:

Fig. 1       einen Längsschnitt durch eine erste Ausführungsform eines hydraulischen Pumpenaggregats,

Fig. 2       einen Längsschnitt durch eine zweite Ausführungsform,

Fig. 3       jeweils eine rechte und eine linke Hälfte einer weiteren Ausführungsform, im Teillängsschnitt, und

Fig. 3a       eine Detailvariante zu der linken Hälfte von Fig. 3.

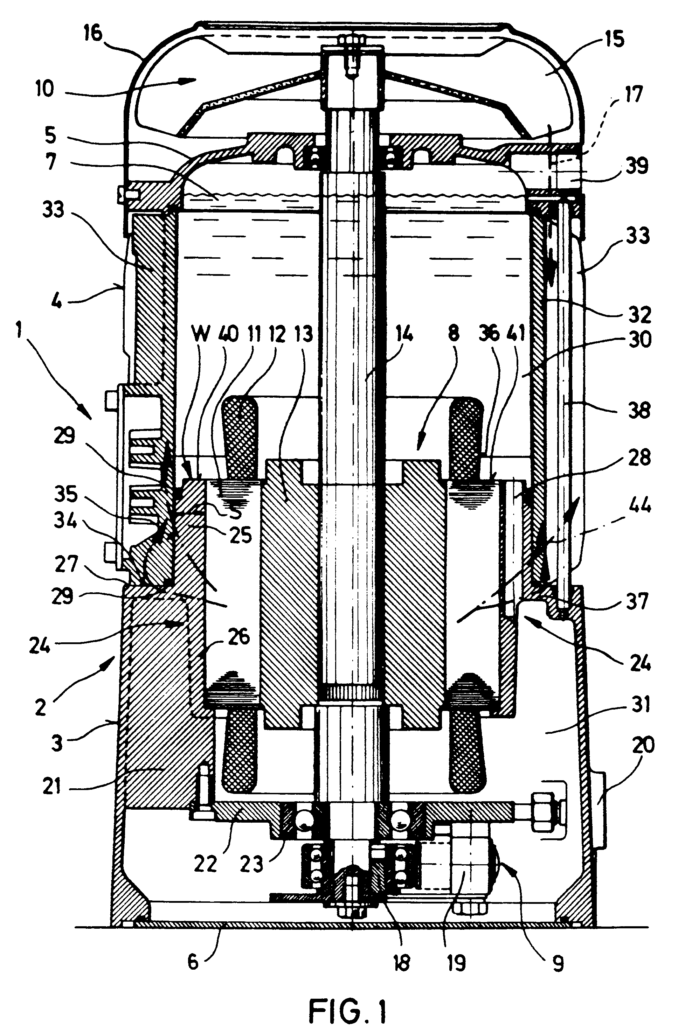

Ein hydraulisches Pumpenaggregat 1 gemäß Fig. 1, das zum Dauerbetrieb an der Leistungsgrenze seines Elektromotors geeignet ist, besitzt ein Gehäuse 2 mit einem ständerförmigen Unterteil 3 und einem außenverrippten Oberteil 4. Deckel 5 und 6 schließen das Gehäuse ab. Das Gehäuse 2 ist innen mit Öl 7 gefüllt, dessen Spiegel bis zum Deckel 5 reichen kann.

Im Gehäuse 2 ist ein Elektromotor 8 der offenen Bauart gelagert, der einen Hydraulikteil 9 im Unterteil 3 treibt. Oben auf dem Deckel 5 ist ein Kühlgebläse 10 gelagert.

Der Elektromotor 8 besteht aus einem Stator 11 mit einer Stator- oder Erregerwicklung 12 sowie aus einem im Stator 11 drehbaren Rotor 13, mit seiner Rotorwelle 14. Die Rotorwelle 14 ist oben durch den Deckel 5 hindurch verlängert und treibt dort ein Lüfterrad 15 des Kühlgebläses 10. Das Kühlgebläse 10 wird durch einen Schutzdeckel 16 abgedeckt, der gleichzeitig zur Kühlluftführung (strichlierter Pfeil 17) entlang der Außenseite des Gehäuseoberteils 4 dient.

Im Hydraulikteil 9 sind hydraulische Pumpenelemente 19 vorgesehen, die über einen Exzenter 18 von der Rotorwelle 14 angetrieben werden und das Öl 17 zu einem Auslaß 20 im Gehäuseunterteil 3 fördern. Im Gehäuseunterteil 3 sind innere Rippen 21 eingeformt, an denen eine Lagerplatte 22 für ein Lager 23 der Rotorwelle 14 befestigt ist.

Ferner ist in den Unterteil 3 eine Aufnahme 24 für den Stator 11 des Elektromotors eingeformt, die durch einen nach oben stehenden Kragen 25 und einen unteren Teil 26 gebildet wird. Der in seiner radialen Stärke S dicker als der Teil 26 ausgebildete Kragen 25 ist über eine Schulter 27 von der Außenseite des Unterteils 3 abgesetzt. Im Kragen 25 verlaufen mehrere Ölkanäle 28, die eine Strömungverbindung von einer oberhalb des Elektromotors 8 liegenden Speicherkammer 30 zur untenliegenden Pumpenkammer 31 herstellen.

Der Gehäuseoberteil 4 besitzt eine relativ dünne Gehäusewand 32 mit außenliegenden Kühlrippen 33. Der Oberteil 4 ist über den Kragen 25 mit einer Gleitpassung geschoben und steht mit seiner Stirnfläche 34 auf der Schulter 27 stumpf auf. Im Verbindungsbereich der Gehäuseteile 3 und 4 sind Dichtelemente 29 vorgesehen. Die mit 35 bezeichnete Innenwand des Gehäuseoberteils 4 liegt satt an der Außenwand des Kragens 25 an. Die Linie 36 deutet die Bearbeitung der Innenwand 35 zwecks einer genauen Passung an. Von der Aufnahme 24 führt ein horizontaler Flansch 37 zur Außenwand des Unterteils 3. Ein Ölschaurohr 38 verbindet, von außen sichtbar, die Speicherkammer 30 mit der Pumpenkammer 31. Die Rückführung des Öls zur Speicherkammer 30 erfolgt über einen Einlaß 39 im oberen Deckel 5. Die obere Stirnfläche 40 des Kragens 25 fluchtet in etwa mit der oberen Stirnfläche 41 des Stators 11.

Der Kragen 25 bildet einen Wärmeübertragungskörper W, mit dem im Stator 11 entstehende Wärme wirkungsvoll zum Gehäuseoberteil 4 transportiert wird, von dessen Kühlrippen 33 dank der Kühlluftströmung 17 diese Wärme rasch abgeführt wird. Die Wärmeströmung ist durch strichpunktierte Pfeile 44 angedeutet.

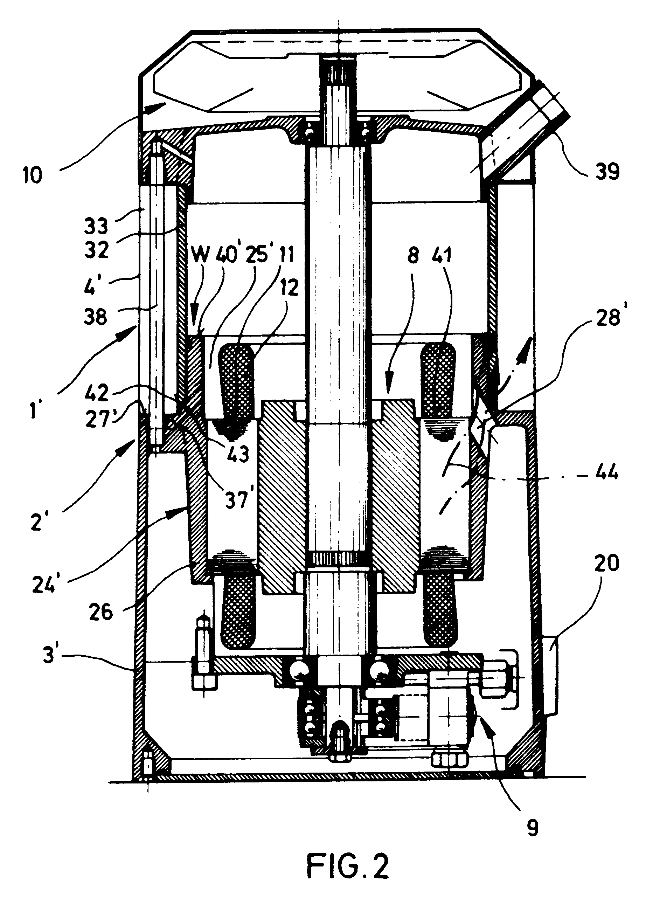

Bei der Ausführungsform eines hydraulischen Pumpenaggregates 1' von Fig. 2 liegen in etwa die gleichen Komponenten vor, wie bei der Ausführungsform von Fig. 1. Unterschiedliche Gestaltungswerkmale werden mit den gleichen Bezugsziffern wie in Fig. 1 und einem Apostroph hervorgehoben.

Das Gehäuse 2' aus dem Unterteil 3' und dem Oberteil 4' lagert den Elektromotor 8 in einer Aufnahme 24' im Unterteil 3', bei der der Kragen 25' dünner ist, als der Kragen 25 bei der Ausführungsform von Fig. 1. Ferner ist der Stator 11 des Elektromotors kürzer als bei der Ausführungsform von Fig. 1 und so weit in die Aufnahme 24' eingepreßt, daß das Stirnende 41 des Stators 11 in etwa auf der Höhe der Schulter 27' liegt. Der Kragen 25' ragt über die Statorwicklung 12 hinaus, so daß sein Stirnende 40' relativ weit oben im Gehäuseoberteil 4' liegt. Der Kragen 25' bildet auch hier wiederum einen Wärmeübertragungskörper W, mit dem die in die Aufnahme 24' vom Stator 11 eingeleitete Wärme wirkungsvoll in die Gehäusewand 32 des Oberteils 4' und von dieser über die Kühlrippen 33 nach außen dorthin abgeführt wird, wo das Kühlgebläse 10 besonders wirksam ist. Die strichpunktierten Pfeile 44 deuten den Wärmetransportweg an. Zur Vereinfachung der Montage ist die Gehäusewand 32 des Operteils 4' bei 42 kegelig angeschrägt. Eine entsprechend schräge Gegenfläche 43 ist im Übergang vom Flansch 37' zum Kragen 25' vorgesehen. Ein Teil der in die Aufnahme 24' eingeleiteten Wärme wird deshalb auch über die aneinanderliegenden Flächen 42, 43 in den Gehäuseoberteil geführt.

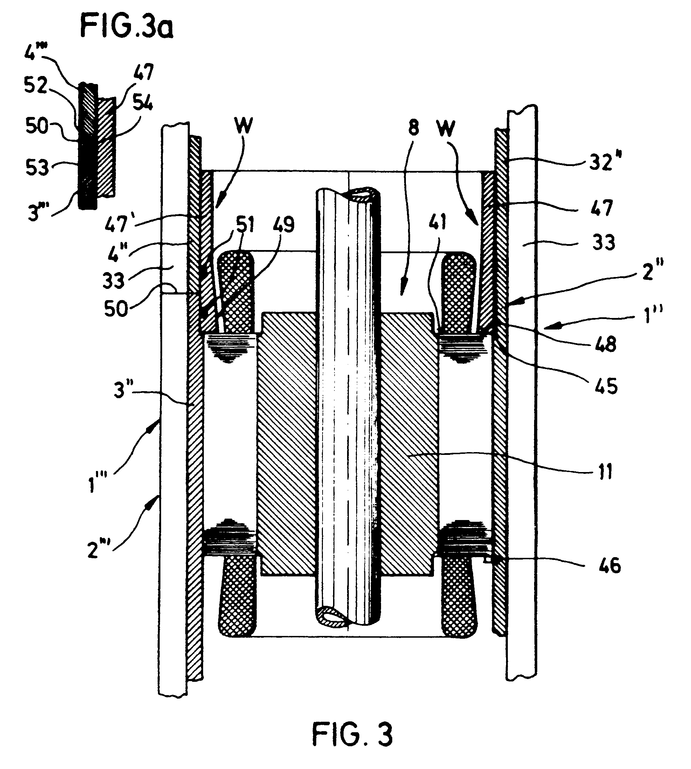

Bei der Ausführungsform des Pumpenaggregats 1'' von Fig. 3 (rechte Hälfte) besteht das Gehäuse 2" aus einem durchgehenden, gezogenen Rohr mit einer Innenwand 32" und den außenliegenden Kühlrippen 33. Der Stator 11 ist so weit in das Gehäuse 2" eingepreßt, daß sein oberes Stirnende 41 auf der Höhe einer Schulter 45 zu liegen kommt und er auf einem Anschlag 46 aufsitzt. Die Schulter 45 dient zum Erleichtern des Einpressens des Stators 11. Als Wärmeübertragungskörper W dient hier eine ringförmige Hülse 47, die mit ihrem unteren Stirnende 43 auf dem Stirnende 41 des Stators 11 aufsitzt und gleichzeitig an der Innenwand der Gehäusewand 32" anliegt. Die Hülse 47 dient auch zur Lagesicherung des Stators 11. Die im Stator 11 entstehende Wärme wird nicht nur direkt an die Gehäusewand 32" übertragen, sondern auch nach oben über den Wärmeübertragungskörper W.

Bei der Ausführungsform des Pumpenaggregates 1"' (linke Hälfte von Fig. 3) ist das Gehäuse 2"' in Höhe einer Teilungsfuge 50 zweigeteilt, so daß ein Unterteil 3" und ein Oberteil 4" entsteht, die beide gezogene Rohre mit Außenrippen 33 sind. Die Hülse 47' ist bei dieser Ausführungsform mit zwei Dichtungselementen 51 ausgestattet, die beiderseits der Teilungsfuge 50 abdichten. Die Hülse 47' ist gegebenenfalls wie auch die Hülse 47 mit einer unterseitigen Verdickung 49 versehen, um den Wärmeübergang vom Stirnende 41 des Stators zur Hülse 47' zu verbessern.

Die Teilungsfuge 50 könnte gemäß Fig. 3a auch mit Abstufungen 52 und 53 zwischen dem Unterteil 3"' und dem Oberteil 4"' ausgebildet werden, so daß eine Dichtung 54 in diesem Bereich einbringbar ist. Die Hülse 47 entspricht der der rechten Hälfte von Fig. 3. Zur Verbindung des oberhalb des Elektromotors 8 liegenden Speicherraums mit dem untenliegenden Pumpenraum kann die Rotorwelle beispielsweise hohl ausgebildet sein.

**Patentansprüche**

1. Hydraulisches Pumpenaggregat (1, 1', 1"'), mit einem einen aufrechtstehenden Ölbehälter bildenden Gehäuse (2, 2', 2"'), in dem im Ölbad ein offener Elektromotor (8) mit vertikal stehender Welle (14) angeordnet ist, dessen Stator (11) mit der Innenwand des Gehäuses in wärmeübertragender Verbindung steht, und der wenigstens ein untenliegendes hydraulisches Pumpenelement (9) antreibt, und mit einem durch ein außenliegendes Kühlgebläse (10) zwangsgekülten Gehäuse-Oberteil (4, 4', 4", 4"'), **dadurch gekennzeichnet,** daß das Gehäuse (2, 2', 2"') einen in einen Unterteil (3, 3', 3", 3"') und den Oberteil (4, 4', 4", 4"') geteilten Rohrkörper mit einer umlaufenden Teilungsfuge (50) aufweist, daß der Stator (11) in den Unterteil (3, 3', 3", 3"') eingepreßt ist, und daß an dem dem zwangsgekühltem Gehäuseoberteil zugewandten Statozende (11) und an der Innenwand des Gehäuseoberteils (2, 2', 2"') ein zylindrischer metallischer Wärmeübertragungskörper (W) anliegt, der über die Teilungsfuge (50) in den Oberteil (4, 4', 4", 4"') ragt und eine schräg nach oben gerichtete Wärmeubrücke vom oberen Ende des Stator (11) durch das Ölbad zur Innenwand des Oberteils (4, 4', 4", 4"') bildet.

2. Hydraulisches Pumpenaggregat nach Anspruch 1, **dadurch gekennzeichnet,** daß der als zylindrische Hülse (47') ausgebildete Wärmübertragungskörper (W) beiderseits der Teilungsfuge (50) Dichtelemente (51) enthält.

3. Hydraulisches Pumpenaggregat nach Anspruch 1, **dadurch gekennzeichnet,** daß die Teilungsfuge (50) abgestuft ist und ein Dichtelement (54) enthält.

4. Hydraulisches Pumpenaggregat nach Anspruch 1, **dadurch gekennzeichnet,** daß der Unterteil (3, 3') innen verrippt und der Oberteil (4, 4') außen verrippt ausgebildet ist, daß der Stator (11) in eine einen hochstehenden und sich in Hochrichtung des Gehäuses über ein Mehrfaches seiner radialen Stärke (S) mit dem Oberteil (4, 4') überlappenden Kragen (25, 25') aufweisende, topfförmige Aufnahme (24, 24') des Unterteils (3, 3') eingepreßt ist, und daß der das obere Stirnende (41) des Stators (11) einfassende Kragen (25) die Wärmebrücke bildet.

5. Hydraulisches Pumpenaggregat nach Anspruch 4, **dadurch gekennzeichnet,** daß der Kragen (25, 25') über eine Schulter (27) nach innen abgesetzt ist, und daß der Oberteil (4, 4') stumpf auf der Schulter (27) aufsteht.

6. Hydraulisches Pumpenaggregat nach den Ansprüchen 4 und 5, **dadurch gekennzeichnet,** daß der Kragen (25) eine größere radiale Stärke (S) besitzt als der darunterliegende Teil (26) der topfförmigen Aufnahme (24).

7. Hydraulisches Pumpenaggregat nach den Ansprüchen 4 bis 6, **dadurch gekennzeichnet,** daß im Kragen (25, 25') Ölkanäle (28, 28') angeordnet sind.

8. Hydraulisches Pumpenaggregat nach den Ansprüchen 4 und 5, **dadurch gekennzeichnet,** daß das obere Stirnende (41) des Stators (11) in etwa auf der Höhe der Schulter (27) liegt, und daß sich der Kragen (25') nach oben bis über die Statorwicklung (12) erstreckt.

9. Hydraulisches Pumpenaggregat nach einem der Ansprüche 1 bis 4, **dadurch gekennzeichnet,** daß der Oberteil (4, 4') das leere Seriengehäuse eines gegenüber dem Elektromotor (8) größeren Elektromotors ist.

## Claims

1. Hydraulic pump unit (1, 1', 1'''), with a casing (2, 2', 2'''), which forms an upright oil reservoir and in which an open electric motor (8) with a vertical shaft (14) is arranged in the oil bath, the stator (11) of which motor is connected in a heat-transmitting manner to the inner wall of the casing and which drives at least one hydraulic pump component (9) lying below, and with an upper casing part (4, 4', 4'', 4'''), which is forced-air cooled by an external cooling fan (10), characterised in that the casing (2, 2', 2''') comprises a tubular body, which is divided into a lower part (3, 3', 3'', 3''') and the upper part (4, 4', 4'', 4''') and has a circulating dividing line (50), that the stator (11) is pressed into the lower part (3, 3', 3'', 3'''), and that a cylindrical metallic heat-transmitting body (W) bears against the stator end which faces the forced-air cooled upper casing part and against the inner wall of the upper casing part (2, 2', 2'''), which body (W) projects beyond the dividing line (50) into the upper part (4, 4', 4'', 4''') and forms an upwardly sloping thermal bridge from the upper end of the stator (11) through the oil bath to the inner wall of the upper part (4, 4', 4'', 4''').

2. Hydraulic pump unit according to claim 1, characterised in that the heat-transmitting body (W), which is formed as a cylindrical sleeve (47'), comprises sealing components (51) on both sides of the dividing line (50).

3. Hydraulic pump unit according to claim 1, characterised in that the dividing line (50) is stepped and comprises a sealing component (54).

4. Hydraulic pump unit according to claim 1, characterised in that the lower part (3, 3') is internally ribbed and the upper part (4, 4') externally ribbed, that the stator (11) is pressed into a cup-shaped receptacle (24, 24') of the lower part (3, 3'), which receptacle comprises an upright collar (25, 25'), which overlaps with the upper part (4, 4') in the vertical direction of the casing over a multiple of its radial thickness (S), and that the collar (25), which encloses the upper front end (41) of the stator (11), forms the thermal bridge.

5. Hydraulic pump unit according to claim 4, characterised in that the collar (25, 25') is stepped towards the inside via a shoulder (27), and that the upper part (4, 4') sits flushly on the shoulder (27).

6. Hydraulic pump unit according to claims 4 and 5, characterised in that the collar (25) has a greater radial thickness (S) than the underlying part (26) of the cup-shaped receptacle (24).

7. Hydraulic pump unit according to claims 4 to 6, characterised in that oil ducts (28, 28') are arranged in the collar (25, 25').

8. Hydraulic pump unit according to claims 4 and 5, characterised in that the upper front end (41) of the stator (11) lies approximately at the level of the shoulder (27), and that the collar (25') extends upwards beyond the stator winding (12).

9. Hydraulic pump unit according to one of claims 1 to 4, characterised in that the upper part (4, 4') is the empty mass-produced casing of an electric motor which is larger than the electric motor (8).

## Revendications

1. Groupe moto-pompe hydraulique (1, 1', 1'''), comprenant un carter (2, 2', 2''') formant un réservoir d'huile en position debout dans lequel est disposé, dans le bain d'huile, un moteur électrique (8) ouvert avec arbre (14) vertical, dont le stator (11) est en communication thermique avec la paroi intérieure du carter et qui entraîne au moins un élément de pompe hydraulique (9) situé en bas, ainsi qu'une partie supérieure (4, 4', 4'', 4''') du carter à refroidissement forcé par une soufflante d'air de refroidissement (10) placée à l'extérieur, **caractérisé en ce** que le carter (2, 2', 2''') comporte le corps tubulaire avec un joint de division continu (50) divisé en une partie inférieure (3, 3', 3'', 3''') et la partie supérieure (4, 4', 4'', 4'''), que le stator (11) est emmanché dans la partie inférieure (3, 3', 3'', 3'''), et que contre l'extrémité du stator (11) dirigée vers la partie supérieure du carter à refroidissement forcé et la paroi intérieure de la partie supérieure du carter (2, 2', 2''') est appliqué un corps de transmission de chaleur (W) métallique de forme cylindrique qui dépasse du joint de division (50) dans la partie supérieure (4, 4', 4", 4"') et forme un pont thermique dirigé en oblique vers le haut entre l'extrémité supérieure du stator (11) et la paroi intérieure de la partie supérieure (4, 4', 4", 4"') en passant par le bain d'huile.

2. Groupe moto-pompe hydraulique selon la revendication 1, caractérisé en ce que le corps de transmission de chaleur (W) conformé en douille cylindrique (47') est muni de part et d'autre du joint de division (50), d'éléments d'étanchéité (51).

3. Groupe moto-pompe hydraulique selon la revendication 1, caractérisé en ce que le joint de division (50) est étagé et comprend un élément d'étanchéité (54).

4. Groupe moto-pompe hydraulique selon la revendication 1, caractérisé en ce que la partie intérieure (3, 3') est nervurée à l'intérieur et que la partie supérieure (4, 4') est nervurée à l'extérieur; que le stator (11) est emmanché dans un logement (24, 24') en forme de pot de la partie inférieure (3, 3'), qui est équipé d'un collet (25, 25') vertical lequel se chevauche dans le sens vertical, sur un multiple de son épaisseur radiale (s) avec la partie supérieure (4, 4'), et que le collet (25) qui enserre l'extrémité frontale supérieure (41) du stator (11) forme le pont thermique.

5. Groupe moto-pompe hydraulique selon la revendication 4, caractérisé en ce que le collet (25, 25') est décalé vers l'intérieur par l'intermédiaire d'un épaulement (27), et que la partie supérieure (4, 4') repose à plat sur l'épaulement (27).

6. Groupe moto-pompe hydraulique selon les revendications 4 et 5, caractérisé en ce que le collet (25) présente une épaisseur radiale (S) plus grande que celle de la partie (26) sous-jacente du logement (24) en forme de pot.

7. Groupe moto-pompe selon l'une des revendications 4 à 6, caractérisé en ce que des canaux de circulation d'huile (28, 28') sont disposés dans le collet (25, 25')

8. Groupe moto-pompe hydraulique selon les revendications 4 et 5, caractérisé en ce que l'extrémité frontale supérieure (41) du stator (11) se situe sensiblement au niveau de l'épaulement (27), et que le collet (25') s'étend vers le haut jusqu'au-dessus de l'enroulement (12) du stator.

9. Groupe moto-pompe hydraulique selon l'une des revendications 1 à 4, caractérisé en ce que la partie supérieure (4, 4') est constituée par le carter de série vide d'un moteur électrique plus grand par rapport au moteur électrique (8).

FIG. 1

FIG. 2

FIG.3a

FIG. 3